# EUROPÄISCHE PATENTSCHRIFT

(11) **EP 2 065 677 B1**
(45) Veröffentlichungstag und Bekanntmachung des Hinweises auf die Patenterteilung: **22.10.2014**
(21) Anmeldenummer: 08170010.6
(22) Anmeldetag: 26.11.2008
(51) Int. Cl.: G01C 9/32

(54) **Wasserwaage**
Spirit level
Niveau à bulle

(30) Priorität: 29.11.2007 DE 202007000049 U
(43) Veröffentlichungstag der Anmeldung: 03.06.2009
(73) Patentinhaber: Stabila Messgeräte Gustav Ullrich GmbH, 76855 Annweiler (DE)
(72) Erfinder: Kallabis, Gabriel, 76848, Spirkelbach (DE)
(74) Vertreter: Stoffregen, Hans-Herbert

(56) Entgegenhaltungen:
- US-A- 1 082 163
- US-A- 5 414 937
- US-A1- 2005 229 413

## Beschreibung

Die Erfindung bezieht sich auf eine Wasserwaage umfassend einen Grundkörper, z. B. in Form eines Hohlprofils, sowie eine aus einem Libellenkörper mit von diesem umgebenem vorzugsweise tonnenförmigen Hohlraum bestehende Libelle, die in dem Grundkörper fixiert ist, wobei der Hohlraum eine Flüssigkeit mit in dieser schwimmender Gasblase enthält, und der Libellenkörper Stirnflächenbereiche aufweist, die quer zur Längsachse des Hohlraums verlaufen, und wobei zumindest in einem Stirnflächenbereich Maßnahmen zur Verstärkung des Kontrastes zwischen der Gasblase und der Flüssigkeit vorgesehen sind.

Ferner nimmt die Erfindung Bezug auf eine Halterung mit von dieser aufgenommenen Libelle eines Nivelliergerätes.

Wasserwaagen dienen zur Überprüfung der Horizontalität oder Vertikalität eines Objektes, wobei in dem Grundkörper eine oder mehrere Libellen zu einer oder mehreren Messflächen genau ausgerichtet sind. Die zur Messsohle der Wasserwaage exakt justierten Libellen weisen eine Luftblase auf, deren Position zu zumindest zwei Markierungen zu bestimmen ist. Daher sollte ein guter Kontrast zwischen Blasenende und Flüssigkeit bestehen. Dies ist häufig dann nicht möglich, wenn auf die Libelle direktes Licht wie Kunstlicht oder Sonnenstrahlung auftrifft.

Der üblicherweise glasklare Libellenkörper kann mittels einer Halterung in dem Grundkörper der Wasserwaage über eine vorzugsweise aus Kunststoff bestehende Halterung wie Libellenhalter fixiert werden.

Wasserwaagen können aus einem langgestreckten Grundkörper in Form eines Hohlprofils z. B. aus Aluminium bestehen, dessen offene Enden durch stoßabsorbierende Kappen verschlossen sein können.

Es ist auch eine Wasserwaage bekannt, bei der der Libellenkörper umlaufende Markierungsringe zur Kontrastverstärkung aufweist. Ergänzend kann eine Färbung der Stirnbereiche erfolgen. Diesbezügliche Maßnahmen bedürfen jedoch gesonderter Verfahrensschritte, die aufwendig und kostenträchtig sind.

Die DE-A-196 50 683 bezieht sich auf ein Herstellungsverfahren für eine Wasserwaage mit Hohlprofil. Um Libellenkörper mit hoher Genauigkeit in einem Wasserwaagenkörper zu justieren und zu fixieren, erfolgt ein Schweißen mittels Laser. Hierzu ist vorgesehen, dass der Libellenkörper aus lichtdurchlässigem und nicht reflektierendem Kunststoff wie PMMA mit einem Libellenrahmen verschweißt wird, der aus einem Material wie ABS besteht, in dem sich Laserstrahlen in schmelzende Wärme umsetzen.

Um nach der DE-A-199 11 798 eine eindeutige Justage eines Libellenkörpers zu ermöglichen, ist dieser verstellbar in einem Libellenhalter angeordnet.

Eine gattungsbildende Wasserwaage ist der US-A-2005/0229413 zu entnehmen. Um eine Kontrastverstärkung zwischen Gasblase und Flüssigkeit, die sich in einem Libellenkörper befindet, zu erzielen, wird der Libellenkörper von Folien oder Bändern umgeben. Auch besteht die Möglichkeit, die Enden des Libellenkörpers zu färben.

Der vorliegenden Erfindung liegt die Aufgabe zu Grunde, eine Wasserwaage der eingangs genannten Art so weiterzubilden, dass ein hoher Kontrast zwischen Blasenende und Flüssigkeit erzielbar ist Ferner soll eine Halterung für eine Libelle derart weitergebildet werden, dass auch bei ungünstigen Lichtverhältnissen ein hinreichender Kontrast zwischen Gasblase und Flüssigkeit gegeben ist.

Die Aufgabe wird erfindungsgemäß für eine Wasserwaage der eingangs genannten Art im Wesentlichen dadurch gelöst, dass der Libellenkörper mittels einer Halterung in dem Grundkörper fixiert ist, dass der Libellenkörper in dem zumindest einen Stirnflächenbereich stoffschlüssig mit der Halterung verbunden ist und dass die Halterung und/oder die stoffschlüssige Verbindung im Bereich des zumindest einen Stirnflächenbereichs zur Erziclung der Verstärkung des Kontrastes zwischen der Gasblase und der Flüssigkeit strukturiert und/oder gefärbt ist.

Erfindungsgemäß wird eine Wasserwaage mit einer Libelle vorgeschlagen, bei der an den Libellenkörper angrenzender und in Verlängerung des Hohlraums bzw. dessen Längsachse verlaufender Bereich mittelbar oder unmittelbar optisch derart gestaltet ist, dass sich beim Beobachten ein hinreichender Kontrast zwischen Gasblase und Flüssigkeit in dem Hohlraum ergibt, auch dann, wenn ungünstige optische Verhältnisse herrschen.

Vorzugsweise sieht die Erfindung vor, dass die Halterung und/oder die stoffschlüssige Verbindung über den gesamten oder nahezu gesamten Stirnflächenbereich kontrastverstärkend ist.

Insbesondere ist der Libellenkörper in beiden Stirnflächenbereichen stoffschlüssig mit der Halterung verbunden, die im Bereich der Stirnflächenbereiche derart strukturiert und/oder gefärbt ist, dass der optische Kontrast zwischen der Gasblase und der Flüssigkeit verstärkt wird. Insbesondere wird die Halterung in dem zumindest einen Stirnflächenbereich bzw. den Stirnflächenbereichen dunkel gefärbt wie geschwärzt.

Erstaunlicherweise hat sich gezeigt, dass eine Kontrastverstärkung auch gegeben ist, wenn nicht der Stirnflächenbereich selbst, sondern die den Libellenkörper aufnehmende Halterung im Stirnflächenbereich bzw. die stoffschlüssige Verbindung wie der Kleber selbst kontrastverstärkend ist. Durch die stoffschlüssige Verbindung werden Reflexionen zwischen Libellenhalter und Libellenkörper vermieden, die ansonsten zu einer Kontrastverminderung führen.

Insbesondere ist der Libellenkörper mit der Libellenhalterung mittels eines Klebers in den Stirnbereichen vollflächig verklebt. Ein Verschweißen der Halterung mit dem Libellenkörper ist gleichfalls möglich.

Der Hohlraum mit den zum Ausrichten der Gasblase vorhandenen Markierungen wird üblicherweise über eine in dem Grundkörper der Wasserwaage vorhandene Aussparung optisch zugänglich. Außerhalb der Aussparung können sodann die Stirnbereiche des Libellenkörpers kontrastverstärkend ausgebildet sein. Losgelöst hiervon erstreckt sich der kontrastverstärkende Bereich über eine Länge oberhalb und unterhalb des Hohlraums in einem Umfang, dass grundsätzlich unter jedem Blickwinkel, unter dem die Gasblase beobachtet wird, die kontrastverstärkende Wirkung auftreten kann.

Zumindest sollte sich der kontrastverstärkende Stirnwandbereich über eine Höhe erstrecken, die sich zumindest maximal über quer zur Längsachse des Hohlraums verlaufender Erstreckung des Hohlraums selbst erstreckt.

Die Halterung kann im Bereich des zumindest einen Stirnflächenbereichs zwischen der Gasblase und der Flüssigkeit den Kontrast verstärkend ausgebildet sein, insbesondere lichtabsorbierend ausgebildet und/oder mit einem lichtabsorbierenden Medium versehen sein, wobei bevorzugterweise der Bereich bzw. die stoffschlüssige Verbindung dunkel gefärbt wie geschwärzt ist. Bevorzugterweise ist der Libellenkörper über den gesamten quer zu dem Hohlraum verlaufenden Stirnflächenbereich stoffschlüssig mit der Halterung verbunden.

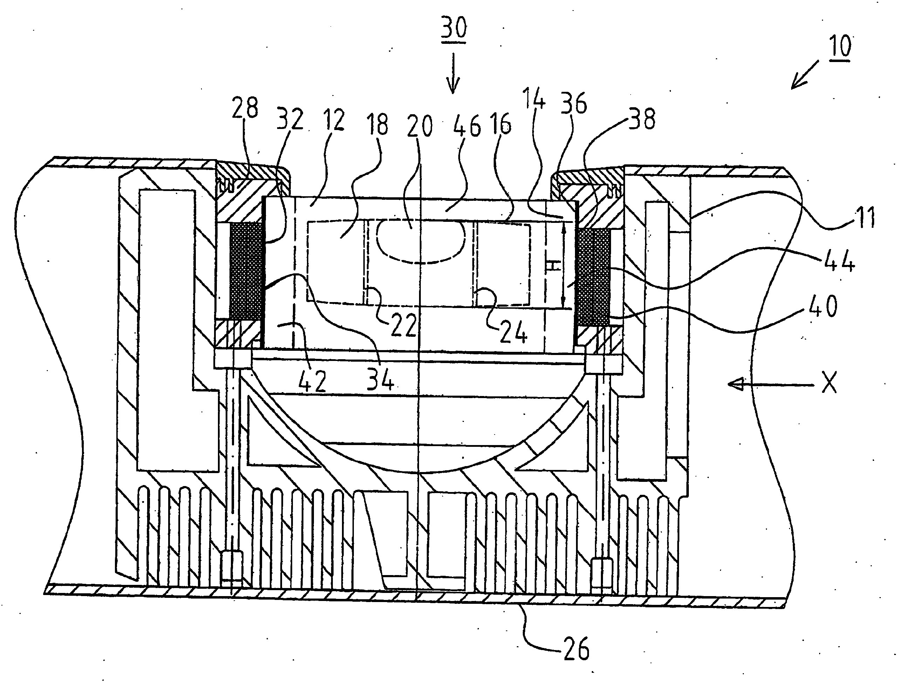

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

In der einzigen Figur ist ein Ausschnitt eines Längsschnitts einer Wasserwaage 10 mit montierter Horizontal-Libelle 12 dargestellt. Die Libelle 12 besteht aus einem quaderförmigen Grundkörper 14 vorzugsweise aus glasklarem Acrylglas, in dessen Längsrichtung sich ein eine tonnenförmige Geometrie aufweisender Hohlraum 16 erstreckt, in dem eine Flüssigkeit 18 mit Luftblase 20 enthalten ist. Ferner sind zwei Markierungen 22, 24 vorhanden, die den Hohlraum 16 umfangsseitig umgeben und zwischen denen die Luftblase 20 ausgerichtet sein muss, wenn die Wasserwaage, d. h. der Wasserwaagenkörper 10 mit seiner Messsohle 26 horizontal ausgerichtet ist.

Die Libelle 12, d. h. der Libellenkörper 14 ist von einer vorzugsweise aus Kunststoff bestehenden Halterung 28 aufgenommen und mit dieser stoffschlüssig verbunden. Die Halterung ist in dem vorzugsweise aus einem Hohlprofil wie Aluminium-Hohlprofil bestehenden Grundkörper 11 fixiert. Der Hohlraum 18, der die Blasenlaufbahn vorgibt, ist über ein von der Halterung 28 begrenztes Sichtfenster 30 optisch erfassbar.

Um auch bei ungünstigen optischen Verhältnissen einen hinreichend hohen optischen Kontrast zwischen der Luftblase 20 und der Flüssigkeit 18 zu erzielen, wird erfindungsgemäß die Halterung 28 und gegebenenfalls der Libellenkörper 14 in nachstehender Weise ausgebildet.

So ist in der linken Darstellung der Libellenkörper 14 in seiner quer zur Längsachse des Hohlraums 16 verlaufenden Stirnfläche 32 dunkel gefärbt wie geschwärzt (Bereich 34), wodurch im Vergleich zu üblichen Libellen der Kontrast zwischen der Luftblase 20 und der Flüssigkeit 18 verstärkt wird. Dies kann zum einen aufgrund der Lichtreflexion an der dunkel gefärbten Stirnfläche 32 und/oder durch die Brechung des Lichtes erfolgen, wodurch beim Erfassen der Luftblase die dunkel gefärbte Stirnfläche 32 im Übergangsbereich zwischen Luftblase 20 und Flüssigkeit 18 optisch wirkt, wodurch der Kontrast erhöht wird.

Die Einfärbung der Stirnfläche bzw. eines Stirnflächenbereichs 32 sollte sich über eine Höhe derart erstrecken, dass der Bereich 32 unter jedem Beobachtungswinkel, unter dem die Luftblase 20 erfasst wird, optisch wirksam ist. Zumindest sollte die Stirnfläche 32 über eine Höhe kontrastverstärkend ausgebildet werden, die entsprechend der zeichnerischen Darstellung in horizontaler Richtung (X) betrachtet der Projektion maximaler Quererstreckung des Hohlraums 16 entspricht. Dieser Bereich ist in der Zeichnung mit "H" gekennzeichnet.

Ist in der zeichnerischen Darstellung nur ein Stirnflächenbereich des Libellenkörpers 14 kontrastverstärkend, also insbesondere dunkel - wie schwarz gefärbt - ausgebildet, so können auch beide Stirnflächenbereiche 32, 36 entsprechend kontrastverstärkend ausgebildet sein.

Erfindungsgemäß wird der kontrastverstärkende Effekt durch die Halterung 28 dadurch erreicht, dass der Libellenkörper 14 stoffschlüssig mit der Halterung 28 verbunden ist. Dies kann durch vollflächiges Verkleben oder Verschweißen mit der Halterung 28 erfolgen (Bereich 38). Sodann ist der dem Stirnflächenbereich 36 zugewandte Bereich 40 der Halterung 28 kontrastverstärkend wie dunkel gefärbt ausgebildet, um die gewünschte Kontrastverstärkung zwischen Gasblase 20 und Flüssigkeit 18 zu erreichen. Die Erstreckung des kontrastverstärkenden Bereichs der Halterung 28 sollte dem entsprechen, wie dieser im Zusammenhang mit dem Libellenkörper 14 erläutert worden ist. Ergänzend oder alternativ kann die stoffschlüssige Verbindung selbst, d. h. z. B. der Kleber, kontrastverstärkend ausgebildet wie gefärbt sein.

Es besteht auch die Möglichkeit, den Libellenkörper 14 mehrteilig auszubilden, wobei außerhalb des Hohlraums 16 Endabschnitte 42, 44 vorgesehen sein können, die die gewünschte Kontrastverstärkung ermöglichen. So kann der Abschnitt 46 des Libellenkörpers 14, innerhalb dessen der Hohlraum 18 verläuft, aus üblichem volltransparentem Material bestehen, wohingegen die stirnseitig verlaufenden Endabschnitte 42, 44 dunkel - wie schwarz gefärbt - sein können.

Werden die Stirnflächenbereiche 32, 36 und/oder die diesen zugewandten Bereiche 40 der Halterung 28 entsprechend der erfindungsgemäßen Lehre ausgebildet, so kann ein Einfärben durch Aufspritzen, Aufdrucken oder Aufstreichen erfolgen. Auch können die entsprechenden Bereiche selbst in sich eingefärbt sein, ohne dass die erfindungsgemäße Lehre verlassen wird.

Unabhängig von Obigem ist insbesondere vorgesehen, dass sich der kontrastverstärkende Bereich über den gesamten Stirnflächenbereich 32, 36 des Libellenkörpers 14 erstreckt, wie dies sich auch prinzipiell aus der einzigen Figur ergibt.

## Patentansprüche

1. Wasserwaage (10) umfassend einen Grundkörper (11), z. B. in Form eines Hohlprofils, sowie eine aus einem Libellenkörper (14) mit von diesem umgebenem vorzugsweise tonnenförmigen Hohlraum (16) bestehende Libelle (12), die in dem Grundkörper fixiert ist, wobei der Hohlraum eine Flüssigkeit (18) mit in dieser schwimmender Gasblase (20) enthält, und der Libellenkörper Stirnflächenbereiche (32, 36) aufweist, die quer zur Längsachse des Hohlraums verlaufen, und wobei zumindest in einem Stirnflächenbereich Maßnahmen zur Verstärkung des Kontrastes zwischen der Gasblase und der Flüssigkeit vorgesehen sind,
**dadurch gekennzeichnet,**
**dass** der Libellenkörper (14) mittels einer Halterung (28) in dem Grundkörper (11) fixiert ist, dass der Libellenkörper in dem zumindest einen Stirnflächenbereich (32, 36) stoffschlüssig mit der Halterung (28) verbunden ist und dass die Halterung und/oder die stoffschlüssige Verbindung im Bereich des zumindest einen Stirnflächenbereichs zur Erzielung der Verstärkung des Kontrastes zwischen der Gasblase (20) und der Flüssigkeit (18) strukturiert und/oder gefärbt ist.

2. Wasserwaage nach Anspruch 1,
**dadurch gekennzeichnet,**
**dass** die Halterung (28) in ihrem stoffschlüssig mit dem Libellenkörper (14) verbundenen Bereich dunkel gefärbt wie geschwärzt ist.

3. Wasserwaage nach Anspruch 1 oder 2,
**dadurch gekennzeichnet,**
**dass** der Libellenkörper (14) mit der Halterung (28) durch Kleben und/oder Verschweißen verbunden ist.

4. Wasserwaage nach Anspruch 1,
**dadurch gekennzeichnet,**
**dass** die Halterung (28) und/oder die stoffschlüssige Verbindung über den gesamten oder nahezu gesamten Stirnflächenbereich (32, 38) kontrastverstärkend ist.

5. Halterung (28) mit von dieser aufgenommenen Libelle (12) umfassend einen Libellenkörper (14) mit von diesem umgebenen vorzugsweise eine tonnenfförmige Geometrie aufweisenden Hohlraum (16), der eine Flüssigkeit (18) mit in dieser schwimmenden Luftblase (20) enthält,
**dadurch gekennzeichnet,**
**dass** der Libellenkörper (14) in zumindest einem Stirnflächenbereich (32, 36) stoffschlüssig mit der Halterung (28) verbunden ist und dass die Halterung oder die stoffschlüssige Verbindung im Bereich des zumindest einen Stirnflächenbereichs zur Erzielung der Verstärkung des Kontrastes zwischen der Gasblase (20) und der Flüssigkeit (18) strukturiert und/oder gefärbt ist.

6. Halterung nach Anspruch 5,
**dadurch gekennzeichnet,**
**dass** die Halterung (28) in ihrem stoffschlüssig mit dem Libellenkörper (14) verbundenen Bereich dunkel gefärbt wie geschwärzt ist.

7. Halterung nach Anspruch 5 oder 6,
**dadurch gekennzeichnet,**
**dass** die stoffschlüssige Verbindung zwischen der Halterung (28) und dem Libellenkörper (14) dunkel gefärbt wie geschwärzt ist.

8. Halterung nach Anspruch 5,
**dadurch gekennzeichnet,**
**dass** der Libellenkörper (14) mit der Halterung (28) durch Kleben oder Schweißen verbunden **ist.**

9. Halterung nach Anspruch 5,
**dadurch gekennzeichnet,**
**dass** die Halterung (28) und/oder die stoffschlüssige Verbindung über den gesamten oder nahezu gesamten Stirnflächenbereich (32, 38) kontrastverstärkend ist.

## Claims

1. Spirit level (10), comprising a base body(11), e.g., in form of a hollow profile, as well as a vial (12), consisting of a vial body (14) with a preferably barrel-shaped cavity (16) surrounded by the vial body, the vial being secured in the base body, whereby the cavity contains a liquid (18) with gas bubble (20) floating therein, and the vial body has end face regions (32, 36) which run transversely to the longitudinal axis of the cavity, and whereby measures are provided in at least one end face region to intensify the contrast between the gas bubble and the liquid,
**characterized in**
**that** the vial body (14) is fixed in the base body (11) by means of a holder (28), that the vial body is connected material-fittingly to the holder (28) in the at least one end face region, and that the holder and/or the material-fitting connection is structured and/or colored in the region of the at least one end face region for achieving the contrast intensification between the gas bubble (20) and the liquid (18).

2. Spirit level according to claim 1,
**characterized in**
**that** the holder (28) is dark colored such as blackened in its region of material-fitting connection to the vial body (14).

3. Spirit level according to claim 1 or 2,
**characterized in**
**that** the vial body (14) is joined to the holder (28) by gluing and/or welding.

4. Spirit level according to claim 1,
**characterized in**
**that** the holder (28) and/or the material-fitting connection is contrast intensifying over the entire or nearly the entire end face region (32, 38).

5. Holder (28) with a vial (12) received by said holder, comprising a vial body (14) with enclosed cavity (16), preferably of barrel shaped geometry, containing a liquid (18) with air bubble (20) floating therein,
**characterized in**
**that** the vial body (14) is joined material-fittingly to the holder (28) in the at least one end face region (32, 36) and that the holder or the material-fitting connection in the region of the at least one end face region is structured and/or colored for achieving the intensification of contrast between the gas bubble (20) and the liquid (18).

6. Holder according to claim 5,
**characterized in**
**that** the holder (28) is dark colored such as blackened in its region of material-fitting connection to the vial body (14).

7. Holder according to claim 5 or 6,
**characterized in**
**that** the material-fitting connection between the holder (28) and the vial body (14) is dark colored, such as blackened.

8. Holder according to claim 5,
**characterized in**
**that** the vial body (14) is joined to the holder (28) by gluing or welding.

9. Holder according to in claim 5,
**characterized in**
**that** the holder (28) and/or the material-fitting connection is contrast intensifying over the entire or nearly the entire end face region (32, 38).

## Revendications

1. Niveau à bulle (10) comprenant un corps de base (11), p. ex. sous forme d'un profilé creux, ainsi qu'une nivelle (12) fixée dans le corps de base et constituée d'un corps de nivelle (14) avec une cavité (16), de préférence en forme de tonnelet, entourée par ledit corps, sachant que la cavité contient un liquide (18) dans lequel flotte une bulle de gaz (20) et que le corps de nivelle présente des zones frontales (32, 36) s'étendant transversalement à l'axe longitudinal de la cavité, et qu'au moins dans une zone frontale sont prévus des mesures d'amplification du contraste entre la bulle de gaz et le liquide,
**caractérisé en ce**
**que** le corps de nivelle (14) est fixé dans le corps de base (11) au moyen d'un support (28), que dans l'au moins une zone frontale (32, 36), le corps de nivelle (14) est raccordé par liaison de matière au support (28), et que le support et/ou le raccord par liaison de matière est/sont structuré(s) ou teint(s) dans la zone de l'au moins une zone frontale afin d'obtenir l'amplification du contraste entre la bulle de gaz (20) et le liquide (18).

2. Niveau à bulle selon la revendication 1,
**caractérisé en ce**
**que** dans sa zone raccordée par liaison de matière au corps de nivelle (14), le support (28) est teint en sombre, par exemple noirci.

3. Niveau à bulle selon la revendication 1 ou 2,
**caractérisé en ce**
**que** le corps de nivelle (14) est raccordé au support (28) par collage et/ou soudage.

4. Niveau à bulle selon la revendication 1,
**caractérisé en ce**
**que** le support (28) et/ou le raccord par liaison de matière est/sont amplificateur(s) de contraste sur la totalité ou la quasi-totalité de la zone frontale (32, 38).

5. Support (28) avec nivelle (12) logée dans celui-ci, comprenant un corps de nivelle (14) entourant une cavité (16) qui présente de préférence une géométrie en forme de tonnelet et qui contient un liquide (18) dans lequel flotte une bulle d'air (20),
**caractérisé en ce**
**que** le corps de nivelle (14) est raccordé au support (28) par liaison de matière dans au moins zone frontale (32, 36), et que le support ou le raccord par liaison de matière est structuré ou teint dans la zone de l'au moins une zone frontale afin d'obtenir l'amplification du contraste entre la bulle de gaz (20) et le liquide (18).

6. Support selon la revendication 5,
**caractérisé en ce**
**que** dans sa zone raccordée par liaison de matière au corps de nivelle (14), le support (28) est teint en sombre, par exemple noirci.

7. Support selon la revendication 5 ou 6,
**caractérisé en ce**
**que** le raccord par liaison de matière entre le support (28) et le corps de nivelle (14) est teint en sombre, par exemple noirci.

8. Support selon la revendication 5,
**caractérisé en ce**
**que** le corps de nivelle (14) est raccordé au support (28) par collage et/ou soudage.

9. Support selon la revendication 5,
**caractérisé en ce**
**que** le support (28) et/ou le raccord par liaison de matière est/sont amplificateur(s) de contraste sur la totalité ou la quasi-totalité de la zone frontale (32, 38).
